# EUROPEAN PATENT SPECIFICATION

(11) **EP 3 742 833 B1**
(45) Date of publication and mention of the grant of the patent: **06.03.2024**
(21) Application number: 18900780.0
(22) Date of filing: 19.01.2018
(51) Int. Cl.: H04W 72/23

(54) **USER TERMINAL, WIRELESS COMMUNICATION METHOD, BASE STATION AND SYSTEM**
BENUTZERENDGERÄT, DRAHTLOSKOMMUNIKATIONSVERFAHREN, BASISSTATION UND SYSTEM
TERMINAL UTILISATEUR, PROCÉDÉ DE COMMUNICATION SANS FIL, STATION DE BASE ET SYSTÈME

(43) Date of publication of application: 25.11.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/001686
(87) International publication number: WO 2019/142341

(56) References cited:
- FRAUNHOFER IIS ET AL: "Supporting of UL Grant-Free and SPS Configured Access", 3GPP DRAFT; R1-1720989_CONFIGURED_UL_GRANT_FREE_SPS-GR ANT_BASED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 17 November 2017 (2017-11-17), XP051369122, Retrieved from the Internet: URL:http://www.3gpp.org/ftp/tsg%5Fran/WG1% 5FRL1/TSGR1%5F91/Docs/ [retrieved on 2017-11-17]
- CATT: "Further details of UL transmission procedures", 3GPP DRAFT; R1-1720205, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051369841, Retrieved from the Internet: URL:http://www.3gpp.org/ftp/tsg%5Fran/WG1% 5FRL1/TSGR1%5F91/Docs/ [retrieved on 2017-11-18]
- "Supporting of UL Grant-Free and SPS Configured Access", 3GPP TSG RAN WG1#91 R1-1720989, 3GPP, 17 November 2017 (2017-11-17), XP051369122,
- "On Support of UL Grant-Free and Grant-Based Configured Access", 3GPP TSG RAN WGl#90Bis R1-1718761, 3GPP, 2 October 2017 (2017-10-02), XP051352440,
- CATT: "Further details of UL transmission procedures", 3GPP TSG RAN WG1#91 R1-1720205, 3GPP, 18 November 2017 (2017-11-18), XP051369841,

## Description

### Technical Field

The present invention relates to a user terminal, a radio communication method, a base station, and a system.

### Background Art

In Universal Mobile Telecommunications System (UMTS) networks, for the purpose of higher data rates and lower latency, Long Term Evolution (LTE) has been specified (Non-Patent Literature 1). Furthermore, for a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) have been also studied.

Legacy LTE systems (e.g., LTE Rel. 8 to 13) perform communication on Downlink (DL) and/or Uplink (UL) by using subframes (also referred to as, for example, Transmission Time Intervals (TTIs)) of 1 ms. The subframe is a transmission time unit of 1 channel-coded data packet, and is a processing unit of scheduling, link adaptation and retransmission control (HARQ: Hybrid Automatic Repeat reQuest).

Furthermore, a radio base station (e.g., eNode B (eNB)) controls allocation (scheduling) of data to a user terminal (UE: User Equipment), and notifies the UE of a scheduling instruction of data by using Downlink Control Information (DCI). For example, the UE that complies with legacy LTE (e.g., LTE Rel. 8 to 13) transmits UL data in a subframe that comes a given duration after (e.g., after 4 ms) when receiving DCI (also referred to as a UL grant) for instructing UL transmission.

Furthermore, in the legacy LTE systems (e.g., LTE Rel. 8 to 13), the UE maps an uplink signal on an appropriate radio resource to transmit to the eNB. Uplink user data is transmitted by using an uplink shared channel (PUSCH: Physical Uplink Shared Channel). Furthermore, Uplink Control Information (UCI) is transmitted by using a PUSCH when transmitted together with the uplink user data, and is transmitted by using an uplink control channel (PUCCH: Physical Uplink Control Channel) when transmitted alone.

### Citation List

### Non-Patent Literature

Non-Patent Literature 1: 3GPP TS 36 300 V8 12 0 "Evolved Universal Terrestrial Radio Access (E-UTRA) and Evolved Universal Terrestrial Radio Access Network (E-UTRAN); Overall description; Stage 2 (Release 8)", April 2010

FRAUNHOFER IIS ET AL: "Supporting of UL Grant-Free and SPS Configured Access" relates to UE with grant-free (GF) and SPS (dedicated resources in grant-based GB fashion) transmission with multiple configurations. GF transmission enhancements and related procedures to improve latency and reliability of UREEC in uplink are discussed. The discussion introduces a managed access resource allocation mechanism supporting a combination of both grant-free (GF) and SPS or GB transmission.

### Summary of Invention

### Technical Problem

A future radio communication system (e.g., NR) is assumed to control scheduling of data by using a configuration different from those of the legacy LTE systems. For example, it has been studied to realize communication latency reduction to provide a communication service (e.g., Ultra Reliable and Low Latency Communication (URLLC)) that is requested to provide low latency and high reliability.

More specifically, to reduce a latency time taken until UL data transmission starts, it has been studied to apply UL data transmission based on a dynamic UL grant and, in addition, UL data transmission based on a UL grant (e.g., configured grant) configured by a higher layer.

Furthermore, Periodic CSI (P-CSI) and Aperiodic CSI (A-CSI) and, in addition, Semi-Persistent CSI (SP-CSI) have been studied for UL data transmission.

However, according to NR, study on a method for configuring UL data transmission based on the dynamic UL grant and UL data transmission based on the UL grant configured by the higher layer has not yet advanced. Unless an appropriate configuration is made, there is a risk that a communication throughput and communication quality deteriorate.

It is therefore an object of the present disclosure to provide a user terminal and a radio communication method that, when a plurality of transmission methods of an uplink shared channel are supported, appropriately configure transmission of the uplink shared channel.

### Solution to Problem

The object of the invention is achieved by the subject-matter of the independent claims. Advantageous embodiments are defined in the dependent claims. Further examples are provided for facilitating the understanding of the invention.

### Advantageous Effects of Invention

According to one aspect of the present disclosure, when a plurality of transmission methods of an uplink shared channel are supported, it is possible to appropriately configure transmission of the uplink shared channel.

### Brief Description of Drawings

Figs. 1A to 1C are diagrams illustrating one example of a PUSCH transmission method.
Figs. 2A to 2C are diagrams illustrating one example of PUSCH configuration parameters according to aspect 1.
Fig. 3 is a diagram illustrating one example of PUSCH configuration parameters according to aspect 2.
Fig. 4 is a diagram illustrating one example of a schematic configuration of a radio communication system according to the present invention.
Fig. 5 is a diagram illustrating one example of an overall configuration of a radio base station according to the present invention.
Fig. 6 is a diagram illustrating one example of a function configuration of the radio base station according to the present invention.
Fig. 7 is a diagram illustrating one example of an overall configuration of a user terminal according to the present invention.
Fig. 8 is a diagram illustrating one example of a function configuration of the user terminal according to the present invention.
Fig. 9 is a diagram illustrating one example of hardware configurations of the radio base station and the user terminal according to the present embodiment.

### Description of Embodiments

To realize low latency communication, it has been studied for NR to apply Dynamic Grant-based transmission (DG transmission) for transmitting UL data based on a dynamic UL grant (dynamic grant) and, in addition, Configured Grant-based transmission (CG transmission) for transmitting UL data based on a UL grant (e.g., a configured grant or a configured UL grant) configured by a higher layer.

DG transmission may be referred to as a Dynamic Grant-based (DG) Physical Uplink Shared Channel (PUSCH), UL transmission with a dynamic grant, a PUSCH with a dynamic grant, UL transmission with a UL grant, and UL grant-based transmission.

CG transmission may be referred to as a Configured Grant-based (CG) PUSCH, UL transmission with a configured grant, a PUSCH with a configured grant, UL transmission without a UL grant, and UL grant-free transmission. Furthermore, CG transmission may be defined as 1 type of UL Semi-Persistent Scheduling (SPS).

The dynamic grant and the configured grant may be referred to as actual UL grants.

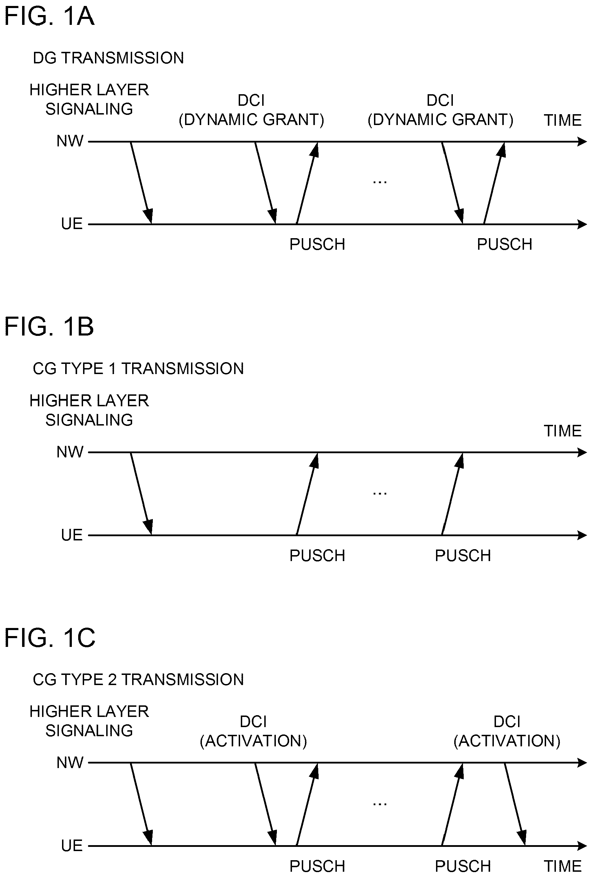

As illustrated in Fig. 1A, in a case of DG transmission, a Network (an NW that may be referred to as, for example, a radio base station, a Base Station (BS), a Transmission/Reception Point (TRP), an eNodeB (eNB) or a gNB (NR Node B) transmits to a UE a downlink control channel (a UL grant or a dynamic grant) for instructing allocation of UL data (PUSCH: Physical Uplink Shared Channel), and the UE transmits the UL data according to a UL grant.

On the other hand, in a case of CG transmission, the UE transmits UL data without receiving a dynamic UL grant. In addition, CG transmission means that there is no UL grant (dynamic grant) of a direct PDCCH for performing UL data transmission. It is also possible to apply, for example, an RRC signaling for configuring CG transmission, and a physical layer signaling (e.g., Downlink Control Information (DCI)) for activating CG transmission as the UL grant (configured grant).

Some types (such as a type 1 and a type 2) of CG transmission control have been studied.

As illustrated in, for example, Fig. 1B, according to CG type 1 transmission, a parameter (that may be referred to as a CG transmission parameter or a CG parameter) used for CG transmission is configured to the UE by using only a higher layer signaling. The CG parameter may include, for example, information for specifying a CG resource. Furthermore, even when CG transmission is configured, and in a case where there is no data in a transmission buffer, the UE may skip CG transmission.

For example, as illustrated in Fig. 1C, according to CG type 2 transmission, a parameter used for CG transmission is configured to the UE by a higher layer signaling. Similar to SPS of legacy LTE, the UE can decide whether or not to perform transmission by using a CG transmission resource (that may be referred to as a CG resource) based on a given activation/deactivation signal. Furthermore, even when CG transmission is activated, and in a case where there is no data in the transmission buffer, the UE may skip CG transmission.

DCI (activation signaling) may activate a PUSCH configured by Semi-Persistent Scheduling (SPS), and DCI (deactivation signaling) or a lapse of a given time may release (deactivate) a PUSCH.

The UE may transmit an acknowledgement response (ACK: Acknowledgement) in response to reception of a given activation/deactivation signal for CG type 2 transmission. The ACK may be transmitted by using, for example, an MAC CE.

In this regard, the higher layer signaling may be one of, for example, a Radio Resource Control (RRC) signaling, a Medium Access Control (MAC) signaling and broadcast information, or a combination of these.

The MAC signaling may use, for example, an MAC Control Element (MAC CE) or an MAC Protocol Data Unit (PDU). The broadcast information may be, for example, a Master Information Block (MIB), a System Information Block (SIB), or Remaining Minimum System Information (RMSI).

In a case of CG type 2 transmission, part of parameters (e.g., a waveform and a periodicity) may be configured to the UE by using a higher layer signaling. In the case of CG type 2 transmission, other parameters may be indicated by, for example, an activation signal. The activation signal may be, for example, a PDCCH (or DCI) whose Cyclic Redundancy Check (CRC) bit is masked (scrambled) by a Cell-Radio Network Temporary Identifier (RNTI) for an activation signal configured by an RRC signaling.

By the way, according to legacy LTE systems (e.g., LTE Rel. 8 to 13), the user terminal (UE: User Equipment) transmits Uplink Control Information (UCI) by using a UL data channel (e.g., PUSCH: Physical Uplink Shared Channel) and/or a UL control channel (e.g., PUCCH: Physical Uplink Control Channel).

As a method for achieving a low Peak-to-Average Power Ratio (PAPR) and/or a low Inter-Modulation Distortion (IMD) during UL transmission, there is a method for multiplexing UCI and UL data on a PUSCH to transmit (piggyback) when UCI transmission and UL data (UL-SCH) transmission occur at the same timing.

When transmitting UL data and UCI (e.g., A/N) by using a PUSCH, the legacy LTE system performs puncture processing on the UL data, and multiplexes the UCI on a resource subjected to the puncture processing. This is because a capacity (or a rate) of the UCI to be multiplexed on the PUSCH is not so great according to the legacy LTE system, and/or this is to prevent complication of reception processing in a base station even when the UE causes a detection mistake of a DL signal.

Performing the puncture processing on data refers to performing encoding assuming that resources allocated for the data can be used (or without taking an unavailable resource amount into account), yet not mapping encoded symbols on resources (e.g., UCI resources) that cannot be actually used (i.e., keeping resources unused). A reception side does not use the encoded symbols of the punctured resources for decoding, so that it is possible to suppress deterioration of characteristics due to the puncturing.

It has been also studied for NR to apply rate-matching processing to UL data when the UL data and UCI are transmitted by using a PUSCH.

Performing the rate-matching processing on data refers to controlling the number of bits after encoding (encoded bits) by taking actually available radio resources into account. When the number of encoded bits is smaller than the number of bits that can be mapped on the actually available radio resources, at least part of the encoded bits may be repeated. When the number of encoded bits is larger than the number of bits that can be mapped, part of the encoded bits may be deleted.

By performing rate-matching processing on UL data, a resource that becomes actually available is taken into account, so that it is possible to perform encoding (with high performance) such that a code rate is high compared to puncture processing. Consequently, by applying rate-matching processing instead of puncture processing when, for example, a UCI payload size is large, it is possible to generate a UL signal of higher quality, so that it is possible to improve communication quality.

Furthermore, Semi-Persistent CSI (SP-SCI) that is a CSI reporting configured by SPS has been studied for NR. Similar to CG type 2 transmission, the SP-CSI is configured by a higher layer signaling, and is activated/deactivated by DCI.

By the way, a higher layer parameter (e.g., a PUSCH configuration (PUSCH-Config) parameter) for PUSCH transmission, and a higher layer parameter (e.g., a SPS configuration (SPS-Config) parameter) for SPS transmission have been studied. These higher layer parameters may include, for example, at least one of following parameters.

### (1) The number of times of repeated transmission K (repetition number K)

For example, this parameter configures one of {1, 2, 4 and 8}.

### (2) Frequency hopping (frequencyHopping)

For example, this parameter configures one of {a mode 1 and a mode 2}. The mode 1 indicates intra-slot frequency hopping, and the mode 2 indicates inter-slot frequency hopping.

### (3) Resource Allocation (RA) type

For example, this parameter configures one of an RA type 0, an RA type 1 and dynamic switching between the RA types 0 and 1. Details of the RA types will be described below.

### (4) Demodulation Reference Signal (DMRS) type

For example, this parameter configures one of a plurality of DMRS types. The DMRS type indicates a mapping pattern of the DMRS in a physical layer.

### (5) DMRS additional position (dmrs-AdditionalPosition)

For example, this parameter configures a symbol of the additional DMRS. By using the additional DMRS in addition to a DMRS specified in a specification, it is possible to enhance performance of tracking movement.

### (6) Phase tracking (PTRS: Phase Tracking Reference Signal) (phaseTracking-RS)

At a high frequency, there is a case where a phase shifts during 1 transmission period (e.g., a slot or a Transmission Time Interval (TTI)). The PTRS is arranged in a time direction densely compared to other RSs, and is used to track the phase. For example, this parameter configures enable or disable of the PTRS.

### (7) Transmission Power Control (TPC) accumulation process (tpcAccumulation)

For example, this parameter configures whether or not to accumulate a value notified by a TPC command. Details of the TPC accumulation process will be described below.

### (8) Radio Network Temporary Identifier (RNTI) for PUSCH TPC (tpc-PUSCH-RNTI)

For example, this parameter configures the RNTI used for TPC for a PUSCH.

### (9) Rate-matching (rateMatching)

For example, this parameter configures to a PUSCH one of rate-matching that uses all buffers (Full Buffer Rate-Matching: FBRM), and rate-matching that uses limited buffers (Limited Buffer Rate-Matching: LBRM).

### (10) Rate-matching resource (rateMatchResoruces)

For example, this parameter configures resources for PUSCHs to be rate-matched.

### (11) UCI on PUCCH parameter (uci-on-PUSCH)

For example, this parameter configures one of a plurality of candidates of a value of a dynamic beta offset used to determine a UCI on PUCCH resource amount, and one value of a semi-static beta offset. Details of the UCI on PUCCH parameter will be described below.

However, how at least one of these parameters is configured to CG type 1 transmission, CG type 2 transmission, DG transmission and a SP-CSI reporting on the PUSCH is not determined. Unless parameters are appropriately configured to respective UL transmission methods, there is a risk that a communication throughput and/or communication quality deteriorate.

The inventors of the present invention have studied a configuration and control of parameters for CG transmission, DG transmission and the SP-CSI reporting on the PUSCH, and reached the present invention.

An embodiment of the present disclosure will be described in detail below. Following aspects may be each applied alone or may be applied in combination.

In addition, UCI may include at least one of a Scheduling Request (SR), transmission acknowledgement information (that will be also referred to as, for example, HARQ-ACK: Hybrid Automatic Repeat reQuest-Acknowledge, ACK or Negative ACK (NACK) or A/N) for a DL data channel (e.g., Physical Downlink Shared Channel (PDSCH)), Channel State Information (CSI), Beam Index (BI) information and a Buffer Status Report (BSR).

In the following embodiment, "data", a "data channel (e.g., PUSCH)" and a "data channel resource" may be read interchangeably.

### (Aspect 1)

According to aspect 1, at least two of a plurality of UL transmission methods (CG type 1 transmission, CG type 2 transmission and DG transmission) are independently configured. In other words, a configuration of at least one UL transmission method is performed separately from configurations of other UL transmission methods. An NW notifies a UE of a plurality of parameters respectively associated with a plurality of UL transmission methods by a higher layer signaling. According to the invention, the UE receives a first configuration which includes parameters common to a first physical uplink shared channel, PUSCH, transmission corresponding to configured grant type 1 and a second PUSCH transmission corresponding to configured grant type 2, and receives a second configuration for a third PUSCH transmission scheduled by a dynamic grant.

The number of parameters for at least one UL transmission method may be the same as or may be different from the number of parameters for other UL transmission methods. Values of certain parameters for at least one UL transmission method may be the same as or may be different from values of parameters for other UL transmission methods.

More specifically, one of following aspects 1-1, 1-2 and 1-3 may be used.

### <Aspect 1-1>

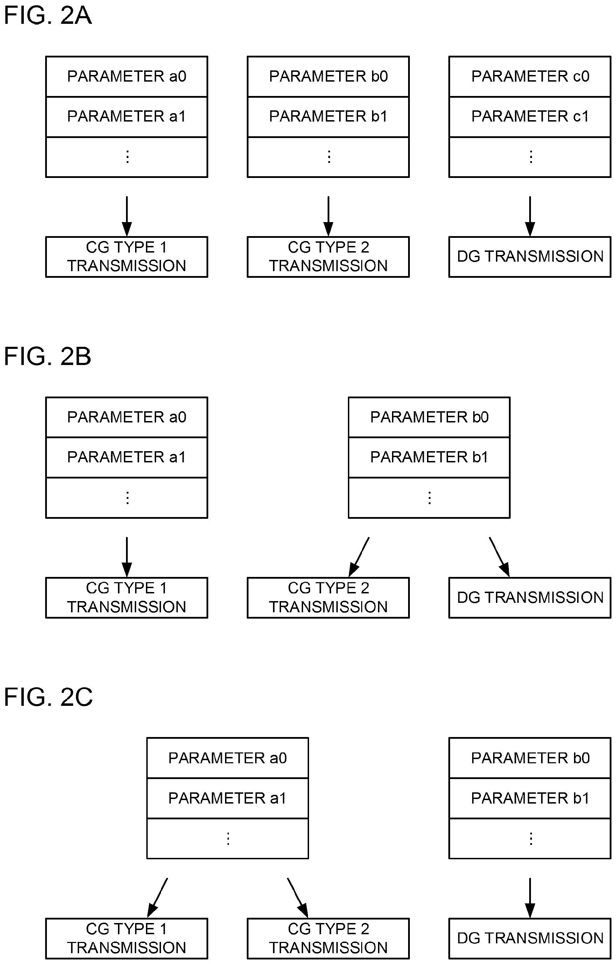

As illustrated in Fig. 2A, independent parameters are configured to CG type 1 transmission, CG type 2 transmission and DG transmission.

Different parameters may be defined for CG type 1 transmission, CG type 2 transmission and DG transmission.

An NW may configure same values or may configure different values of specific parameters to CG type 1 transmission, CG type 2 transmission and DG transmission.

### <Aspect 1-2>

As illustrated in Fig. 2B, independent parameters are configured to CG type 1 transmission and DG transmission, and common parameters are configured to DG transmission and CG type 2 transmission.

CG type 2 transmission and DG transmission can use DCI, and CG type 1 transmission cannot use DCI.

When a plurality of options for a specific parameter are configured by a higher layer signaling, an activation or deactivation signaling (DCI) of CG type 2 transmission may include an option selection field. A UE may be caused to select one of a plurality of options of the option selection field.

### <Aspect 1-3>

As illustrated in Fig. 2C, independent parameters are configured to CG type 1 transmission and DG transmission, and common parameters are configured to CG type 1 transmission and CG type 2 transmission.

This configuration configures the independent parameters to DG transmission and CG transmission (CG type 1 transmission and CG type 2 transmission).

According to the invention, a terminal receives a first -configuration which includes parameters common to a first physical uplink shared channel, PUSCH, transmission corresponding to configured grant type 1 and a second PUSCH transmission corresponding to configured grant type 2, and receives a second configuration for a third PUSCH transmission scheduled by a dynamic grant.

An option selection (e.g., one of a plurality of options configured by a higher layer is selected) field in DCI of activation or deactivation for CG type 2 transmission may be ignored during DG transmission, may be preliminary, or may be set to a special value for CG type 2 transmission.

According to aspect 1, it is possible to configure a parameter suitable to each UL transmission method and, consequently, make a flexible configuration. It is possible to make a flexible configuration for CG type 2 transmission in particular. Furthermore, processing of the UE becomes simple, so that it is possible to suppress a processing load.

### (Aspect 2)

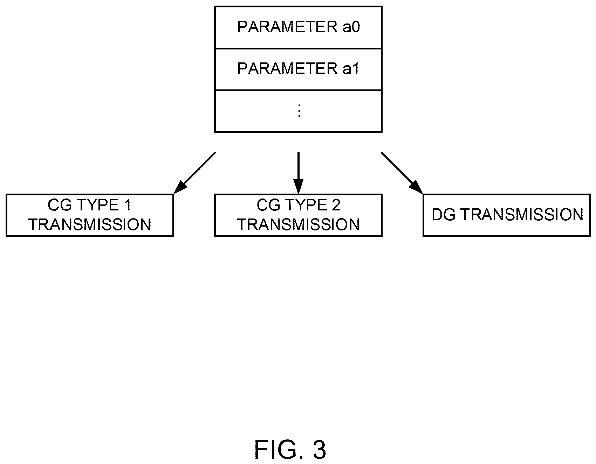

According to aspect 2, as illustrated in Fig. 3, a common configuration is made for all UL transmission methods (CG type 1 transmission, CG type 2 transmission and DG transmission). An NW notifies a UE of parameters that are common between all UL transmission methods by a higher layer signaling.

The UE may perform processing associated with a UL transmission method on a specific parameter among higher layer parameters (common parameters) commonly configured to all UL transmission methods. In other words, the UE may perform different control on at least one UL transmission method from that of other UL transmission methods based on the specific parameter, or makes a different interpretation on at least one UL transmission method from those of other UL transmission methods based on the specific parameter.

The specific parameter may be at least one of a Resource Allocation (RA) type, Transmission Power Control accumulation process (tpcAccumulation) and a UCI on PUSCH parameter (uci-on-PUSCH).

### <RA Type>

A parameter of an RA type indicates one value of an RA type 0, an RA type 1 and dynamic switching between the RA types 0 and 1.

According to the RA type 0, a frequency resource to be allocated to a PUSCH is configured by a bitmap. More specifically, a band is divided into a Resource Block Group (RBG) unit, and each bit of the bitmap indicates whether a corresponding RBG is scheduled (1) or is not scheduled (0). The bitmap may be included in DCI for scheduling the PUSCH, may be included in DCI (activation DCI) for activating the PUSCH, or may be notified by a higher layer signaling.

According to the RA type 1, a frequency resource to be allocated to the PUSCH is configured by a Resource Indication Value (RIV). The RIV is calculated based on, for example, a start virtual block (index) (RBₛₜₐᵣₜ), the number of contiguously allocated RBs (length) (L_{RBs}) and the number of PRBs (N^{size}_{BWP}) in an active carrier Bandwidth Part (a BWP or a partial band). The RIV may be included in DCI for scheduling the PUSCH, may be included in DCI (activation DCI) for activating the PUSCH, or may be notified by a higher layer signaling.

When the RA type is configured to dynamic switching, a 1-bit field in DCI indicates which one of the RA type 0 and the RA type 1 RA for data scheduled by the DCI is.

However, CG type 1 transmission cannot use DCI.

When the RA type is configured to dynamic switching, the UE may determine the RA type for CG type 1 transmission according to one of following options 1, 2 and 3.

### <<Option 1>>

The UE ignores a field of the RA type for CG type 1 transmission, and uses the RA type 1 for CG type 1 transmission at all times. For example, the UE recognizes a resource allocated to CG type 1 transmission based on the RIV The RIV for CG type 1 transmission may be configured by a higher layer signaling, or may be included in a common parameter.

### <<Option 2>>

A waveform for CG type 1 transmission may be configured to the UE. The waveform may be Discrete Fourier Transform-Spread-Orthogonal Frequency Division Multiplexing (DFT-S-OFDM), or Cyclic Prefix-Orthogonal Frequency Division Multiplexing (CP-OFDM). DFT-s-OFDM may be paraphrased as a single carrier waveform or a UL signal to which DFT precoding (or transform precoding) is applied. CP-OFDM can be paraphrased as a multi-carrier waveform, or a UL signal to which DFT precoding is not applied.

The UE ignores the field of the RA type for CG type 1 transmission, and determines the RA type for CG type 1 transmission based on the waveform configured to CG type 1 transmission. When, for example, a DFT-s-OFDM waveform is configured to CG type 1 transmission, the UE uses the RA type 1 for CG type 1 transmission. When a CP-OFDM waveform is configured to CG type 1 transmission, the UE uses the RA type 0 for CG type 1 transmission. The RIV for CG type 1 transmission may be configured by a higher layer signaling, or may be included in the common parameters. The bitmap for CG type 1 transmission may be notified by a higher layer signaling, or may be included in the common parameters.

### <<Option 3»

The UE ignores the field of the RA type for CG type 1 transmission, and determines the RA type for CG type 1 transmission based on the bitmap (frequency domain resource allocation information and a frequency domain resource allocation field). For example, the UE recognizes a resource allocated to CG type 1 transmission based on the bitmap. The bitmap for CG type 1 transmission may be notified by a higher layer signaling, or may be included in the common parameters. When, for example, " 1" is contiguous in the bitmap (the number of contiguous " 1" is a given number or more), the UE uses the RA type 0 for CG type 1 transmission, and, when this is not the case, the UE uses the RA type 1 for CG type 1 transmission. Resource allocation according to the RA type 1 does not include contiguous "1" in a typical case. Therefore, when there is contiguous "1", the UE interprets the RA type as the RA type 0.

### <TPC Accumulation Process>

The UE determines processing of a Transmission Power Control (TPC) command for CG transmission and DG transmission according to the TPC accumulation process parameter (tpcAccumulation).

When tpcAccumulation is enabled, a TPC accumulation process of accumulating correction values of TPC commands and calculating a PUSCH power control adjustment state is performed for CG transmission and DG transmission. When this is not the case, a TPC accumulation process is not performed for CG transmission and DG transmission, and the PUSCH power adjustment state is the correction value of the TPC command.

When tpcAccumulation is enabled, the UE may perform the TPC accumulation process according to one of following options 1 and 2.

### <<Option 1»

An independent TPC accumulation process is performed for CG transmission and DG transmission.

The TPC accumulation process is performed independently for CG transmission and DG transmission. A TPC command in a UL grant (DCI) for scheduling DG transmission is not applied to CG transmission. A TPC command in DCI for activating CG type 2 transmission is not applied to DG transmission. In other words, the UE independently calculates an accumulation value (PUSCH power adjustment state) for CG transmission and an accumulation value (PUSCH power adjustment state) for DG transmission.

In addition, accumulation value reset conditions may be independently configured to the accumulation value (PUSCH power adjustment state) for CG transmission and the accumulation value (PUSCH power adjustment state) for DG transmission to be independently calculated. When, for example, a transmission power parameter for CG transmission is changed, only the accumulation value (PUSCH power adjustment state) for CG transmission may be reset to 0. When the transmission power parameter for DG transmission is changed, only the accumulation value (PUSCH power adjustment state) for DG transmission may be reset to 0. Alternatively, both when the transmission power parameter for CG transmission is changed and when the transmission power parameter for DG transmission is changed, both of the accumulation value (PUSCH power adjustment state) for CG transmission and the accumulation value (PUSCH power adjustment state) for DG transmission may be reset to 0.

### <<Option 2»

A common TPC accumulation process is performed for CG transmission and DG transmission.

Every TPC command in DCI is applied to both of CG transmission and DG transmission. In other words, the UE calculates an accumulation value (PUSCH power adjustment state) for both of CG transmission and DG transmission.

### <UCI on PUSCH Parameter>

The UE determines processing of a beta offset for CG transmission and DG transmission according to the UCI on PUSCH parameter (uci-on-PUSCH).

When transmitting the UCI on PUSCH, the UE may determine a code rate of UCI to be transmitted by using a PUSCH based on a resource amount (e.g., Resource Element (RE)) used for transmission of the UCI, the number of bits of the UCI and a modulation order. Hence, the UE may determine the resource amount (e.g., the number of REs) for the UCI. The UE may receive information (also referred to UCI resource related information, a beta offset or β_{offset}) used to determine the resource amount, and determine the resource amount for UCI to be conveyed on the PUSCH based on the beta offset. Furthermore, transmission power of the PUSCH including the UCI may be determined based on a beta offset value.

The UCI on PUSCH parameter can configure a semi-static beta offset or a dynamic beta offset to the UE for the UCI on PUSCH.

When the semi-static beta offset is used, one parameter (beta offset value) for determining the number of REs for the UCI is configured by an RRC signaling. When the dynamic beta offset is used, a plurality of parameters (a plurality of candidates of the beta offset value) for determining the number of REs for the UCI are configured by the RRC signaling, and one of a plurality of parameters is dynamically selected by using DCI.

Therefore, CG type 1 transmission cannot use the dynamic beta offset. Furthermore, CG type 2 transmission can both use the dynamic beta offset by using activation DCI, and use the semi-static beta offset by using one parameter configured to CG type 1 transmission.

The UCI on PUSCH that uses CG transmission may be referred to as UCI on CG PUSCH. The UCI on PUSCH that uses DG transmission may be referred to as UCI on DG PUSCH.

When the UCI on PUSCH parameter configures a semi-static beta offset value, DG transmission (UCI on DG PUSCH) may use the semi-static beta offset value. When the UCI on PUSCH parameter configures a plurality of candidates of a dynamic beta offset value, DG transmission (UCI on DG PUSCH) may use a value that is indicated by DCI for scheduling the PUSCH among a plurality of candidates of the dynamic beta offset value.

When the UCI on CG PUSCH is supported, and a UCI payload is larger than 2 bits, the UE may determine the beta offset according to one of following options 1 and 2.

### <<Option 1>>

CG type 1 transmission and CG type 2 transmission use the semi-static beta offset at all times. Even when, for example, the UCI on PUSCH parameter configures a plurality of candidates of the dynamic beta offset value to the UE, CG type 1 transmission and CG type 2 transmission use the semi-static beta offset configured in advance.

### <<Option 2»

CG type 1 transmission uses the semi-static beta offset at all times. An operation of CG type 2 transmission is the same as that of DG transmission.

When the UCI on PUSCH parameter configures the semi-static beta offset value, DG transmission and CG type 2 transmission use the semi-static beta offset value. When the UCI on PUSCH parameter uses a plurality of values of a dynamic beta offset for DG transmission, DG transmission and CG type 2 transmission use a value that is indicated by DCI among a plurality of values of the dynamic beta offset.

When the UCI on CG PUSCH is supported and the UCI payload is up to 2 bits, the UE uses puncturing, and ignores a field of the UCI on PUSCH parameter.

When the UCI on CG PUSCH is not supported, the UE ignores the field of the UCI on PUSCH parameter.

According to aspect 2, by configuring the common parameters to CG type 1 transmission, CG type 2 transmission and DG transmission, it is possible to suppress an RRC signaling overhead. Furthermore, the UE can perform appropriate control on each of CG type 1 transmission, CG type 2 transmission and DG transmission by using the common parameters.

### (Aspect 3)

Aspect 3 will describe a configuration and control of a Semi-Persistent-CSI (SP-CSI) reporting on a PUSCH.

It has been studied to support the SP-CSI reporting on the PUSCH. DCI (activation signaling) activates a CSI reporting that uses a PUSCH configured by Semi-Persistent Scheduling (SPS). DCI (deactivation signaling) or a lapse of a given time releases (deactivates) the SP-CSI reporting that uses the PUSCH.

Whether or not some or all of higher layer parameters are common between DG transmission and the SP-CSI reporting that uses the PUSCH is not determined. There is the same problem between CG transmission and the SP-CSI reporting that uses the PUSCH, too.

Aspect 1 or aspect 2 may be applied to the SP-CSI on the PUSCH. That the SP-CSI reporting on the PUSCH is activated by DCI is the same as CG type 2 transmission.

At least two of a plurality of UL transmission methods (the SP-CSI reporting on the PUSCH, CG type 1 transmission, CG type 2 transmission and DG transmission) may be independently configured. For example, parameters for the SP-CSI reporting on the PUSCH and CG type 2 transmission may be common, and parameters for CG type 1 transmission and parameters for DG transmission may be independent. For example, parameters for the SP-CSI reporting on the PUSCH, CG type 2 transmission and DG transmission may be common, and may be independent from parameters for CG type 1 transmission. For example, all UL transmission methods (the SP-CSI reporting on the PUSCH, CG type 1 transmission and CG type 2 transmission and DG transmission) may be commonly configured.

The parameters for the SP-CSI reporting on the PUSCH may include at least one of a periodicity, a CSI-RNTI, and an index of a set of P0 and α for determining transmission power control.

It has been studied to support higher layer parameters similar to those of CG type 2 transmission, and an L1 signaling for the CSI reporting on the PUSCH. Only P0 and α are supported for TPC for the CSI reporting on the PUSCH, and therefore it has been agreed to support only open loop TPC. Whether or not closed loop TPC is supported for the CSI reporting on the PUSCH is not determined.

One of following options 1 and 2 may be applied to closed loop TPC for the CSI reporting on the PUSCH.

### <<Option 1»

Closed loop TPC for the CSI reporting on the PUSCH is not supported. The UE configures transmission power based on a higher layer configuration, and permits maximum power.

### <<Option 2»

Closed loop TPC for the CSI reporting on the PUSCH is supported.

### <<Option 2-1>>

Closed loop TPC depends only on a TPC command field in an activation signaling.

### <<Option 2-2>>

Closed loop TPC depends only on a TPC command field in a TPC group common PDCCH (similar to, for example, DCI formats 3/3A of LTE).

Closed loop TPC for the CSI reporting on the PUSCH appropriates TPC accumulation process (tpcAccumulation) and PUSCH TPC RNTI (tpc-PUSCH-RNTI) parameters of PUSCH configuration parameters.

When tpcAccumulation is enabled, the TPC accumulation process is performed for DG transmission and the CSI reporting on the PUSCH.

When tpcAccumulation is disabled, the TPC accumulation process is not performed for DG transmission and the CSI reporting on the PUSCH.

When tpcAccumulation is enabled, the UE may perform the TPC accumulation process according to one of following options 2-2-1 and 2-2-2.

### <<Option 2-2-1>>>

An independent TPC accumulation process is performed for the CSI reporting on the PUSCH and DG transmission.

The TPC accumulation process is independently performed for the CSI reporting on the PUSCH and DG transmission. A TPC command in a UL grant (DCI) for scheduling DG transmission is not applied to the CSI reporting on the PUSCH. In other words, the UE independently calculates the accumulation value (PUSCH power adjustment state) for the CSI reporting on the PUSCH, and the accumulation value (PUSCH power adjustment state) for DG transmission.

In this regard, accumulation value reset conditions may be independently configured to the accumulation value (PUSCH power adjustment state) for the CSI reporting on the PUSCH and the accumulation value (PUSCH power adjustment state) for DG transmission to be independently calculated. When, for example, a transmission power parameter for the CSI reporting on the PUSCH is changed, only the accumulation value (PUSCH power adjustment state) for the CSI reporting on the PUSCH may be reset to 0. When the transmission power parameter for DG transmission is changed, only the accumulation value (PUSCH power adjustment state) for DG transmission may be reset to 0. Alternatively, both when the transmission power parameter for the CSI reporting on the PUSCH is changed and when the transmission power parameter for DG transmission is changed, both of the accumulation value (PUSCH power adjustment state) for the CSI reporting on the PUSCH and the accumulation value (PUSCH power adjustment state) for DG transmission state may be reset to 0.

### <<<Option 2-2-2>>>

A common TPC accumulation process is performed for the CSI reporting on the PUSCH and DG transmission.

Every TPC command in DCI may be applied to both of the CSI reporting on the PUSCH and DG transmission. In other words, the UE calculates the accumulation value (PUSCH power adjustment state) for both of the CSI reporting on the PUSCH and DG transmission.

### <<Option 2-3>>

Closed loop TPC depends on both of a TPC command of an activation signaling, and a TPC command field in a TPC group common PDCCH (similar to, for example, the DCI formats 3/3A of LTE).

When receiving both of the TPC command of the activation signaling and the TPC command of the TPC group common PDCCH for transmission of an identical SP-CSI reporting, the UE prioritizes the TPC command of the activation signaling. In other words, the UE applies only the TPC command received via the activation signaling.

Closed loop TPC for the CSI reporting on the PUSCH appropriates the TPC accumulation process (tpcAccumulation) and PUSCH TPC RNTI (tpc-PUSCH-RNTI) parameters of the PUSCH configuration parameters.

When tpcAccumulation is enabled, the TPC accumulation process is performed for DG transmission and the CSI reporting on the PUSCH.

When tpcAccumulation is disabled, the TPC accumulation process is not performed for DG transmission and the CSI reporting on the PUSCH.

When tpcAccumulation is enabled, the UE may perform the TPC accumulation process according to one of following options 2-3-1 and 2-3-2.

### <<<Option 2-3-1>>>

An independent TPC accumulation process is performed for the CSI reporting on the PUSCH and DG transmission.

The TPC accumulation process is independently performed for the CSI reporting on the PUSCH and DG transmission. A TPC command in a UL grant (DCI) for scheduling DG transmission is not applied to the CSI reporting on the PUSCH. A TPC command in DCI for activating the CSI reporting on the PUSCH is not applied to DG transmission. In other words, the UE independently calculates the accumulation value (PUSCH power adjustment state) for the CSI reporting on the PUSCH, and the accumulation value (PUSCH power adjustment state) for DG transmission.

In this regard, the accumulation value reset conditions may be independently configured to the accumulation value (PUSCH power adjustment state) for the CSI reporting on the PUSCH and the accumulation value (PUSCH power adjustment state) for DG transmission to be independently calculated. When, for example, a transmission power parameter for the CSI reporting on the PUSCH is changed, only the accumulation value (PUSCH power adjustment state) for the CSI reporting on the PUSCH may be reset to 0. When the transmission power parameter for DG transmission is changed, only the accumulation value (PUSCH power adjustment state) for DG transmission may be reset to 0. Alternatively, both when the transmission power parameter for the CSI reporting on the PUSCH is changed and when the transmission power parameter for DG transmission is changed, both of the accumulation value (PUSCH power adjustment state) for the CSI reporting on the PUSCH and the accumulation value (PUSCH power adjustment state) for DG transmission state may be reset to 0.

### <<<Option 2-3-3>>>

A common TPC accumulation process is performed for the CSI reporting on the PUSCH and DG transmission.

Every TPC command in DCI may be applied to both of the CSI reporting on the PUSCH and DG transmission. In other words, the UE calculates the accumulation value (PUSCH power adjustment state) for both of the CSI reporting on the PUSCH and DG transmission.

According to aspect 3, it is possible to perform appropriate control on each of the CSI reporting on the PUSCH and other UL transmission methods (e.g., DG transmission).

### (Radio Communication System)

The configuration of the radio communication system according to one embodiment of the present invention will be described below. This radio communication system uses one or a combination of the radio communication method according to each of the above embodiment of the present invention to perform communication.

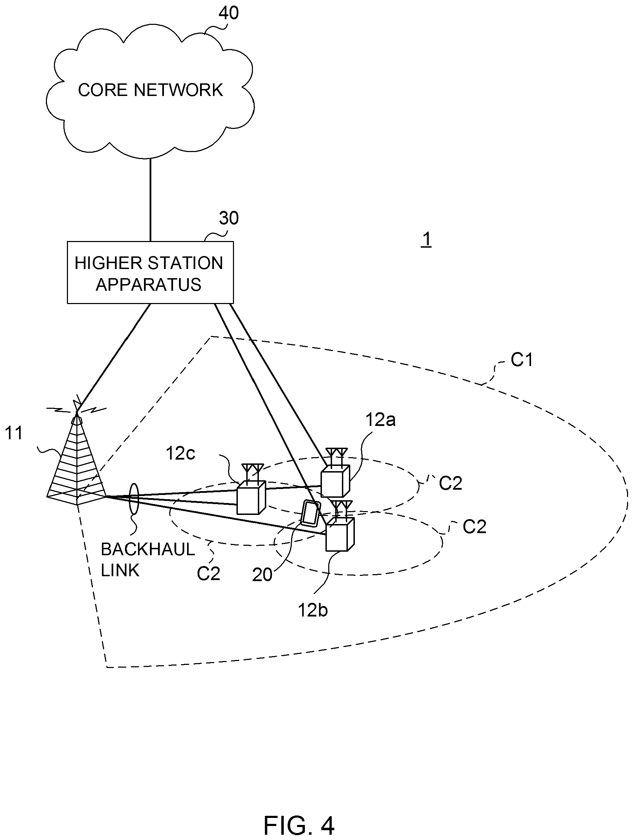

Fig. 4 is a diagram illustrating one example of a schematic configuration of the radio communication system according to the one embodiment of the present invention. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to those illustrated in Fig. 4.

The user terminal 20 can connect with both of the radio base station 11 and the radio base stations 12. The user terminal 20 is assumed to concurrently use the macro cell C1 and the small cells C2 by CA or DC. Furthermore, the user terminal 20 can apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

The radio base station 11 and each radio base station 12 (or the two radio base stations 12) may be configured to be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and a System Information Block (SIB) are conveyed on the PDSCH. Furthermore, a Master Information Block (MIB) is conveyed on the PBCH.

The downlink L1/L2 control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### <Radio Base Station>

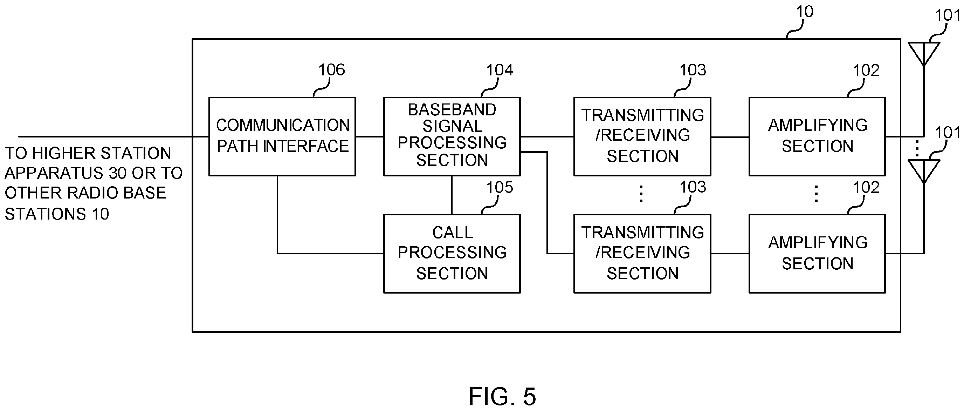

Fig. 5 is a diagram illustrating one example of an overall configuration of the radio base station according to the one embodiment of the present invention. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmission/reception section 103. Furthermore, the baseband signal processing section 104 performs transmission processing such as channel coding and inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency range, and transmits a radio frequency signal. The radio frequency signal subjected to frequency conversion by each transmission/reception section 103 is amplified by each amplifying section 102, and is transmitted from each transmission/reception antenna 101. The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as an uplink signal. Each transmission/reception section 103 receives the uplink signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the channel interface 106. The call processing section 105 performs call processing (such as a configuration and release) of a communication channel, state management of the radio base station 10 and radio resource management.

The channel interface 106 transmits and receives signals to and from the higher station apparatus 30 via a given interface. Furthermore, the channel interface 106 may transmit and receive (backhaul signaling) signals to and from the another radio base station 10 via an inter-base station interface (e.g., optical fibers compliant with the Common Public Radio Interface (CPRI) or the X2 interface).

Furthermore, each transmission/reception section 103 may transmit configuration information of a first uplink shared channel (CG type 1 transmission) that is scheduled by a higher layer signaling, a second uplink shared channel (CG type 2 transmission) that is scheduled by the higher layer signaling and triggered by downlink control information, and a third uplink shared channel (DG transmission) that is scheduled by the downlink control information via the higher layer signaling.

Furthermore, each transmission/reception section 103 may receive one of the first uplink shared channel, the second uplink shared channel and the third uplink shared channel.

Furthermore, each transmission/reception section 103 may transmit configuration information of the first uplink shared channel (CG type 1 transmission) that is scheduled by the higher layer signaling, the second uplink shared channel (CG type 2 transmission) that is scheduled by the higher layer signaling and triggered by the downlink control information, the third uplink shared channel (DG transmission) that is scheduled by the downlink control information, and a CSI reporting (SP-CSI reporting) that is scheduled by the higher layer signaling, triggered by the downlink control information and transmitted on an uplink shared channel via the higher layer signaling. Furthermore, each transmission/reception section 103 may transmit configuration information of at least two of the first uplink shared channel (CG type 1 transmission) that is scheduled by the higher layer signaling, the second uplink shared channel (CG type 2 transmission) that is scheduled by the higher layer signaling and triggered by the downlink control information, the third uplink shared channel (DG transmission) that is scheduled by the downlink control information, and the CSI reporting (SP-CSI reporting) that is scheduled by the higher layer signaling, triggered by the downlink control information and transmitted on the uplink shared channel via the higher layer signaling.

Furthermore, each transmission/reception section 103 may receive the SP-CSI reporting.

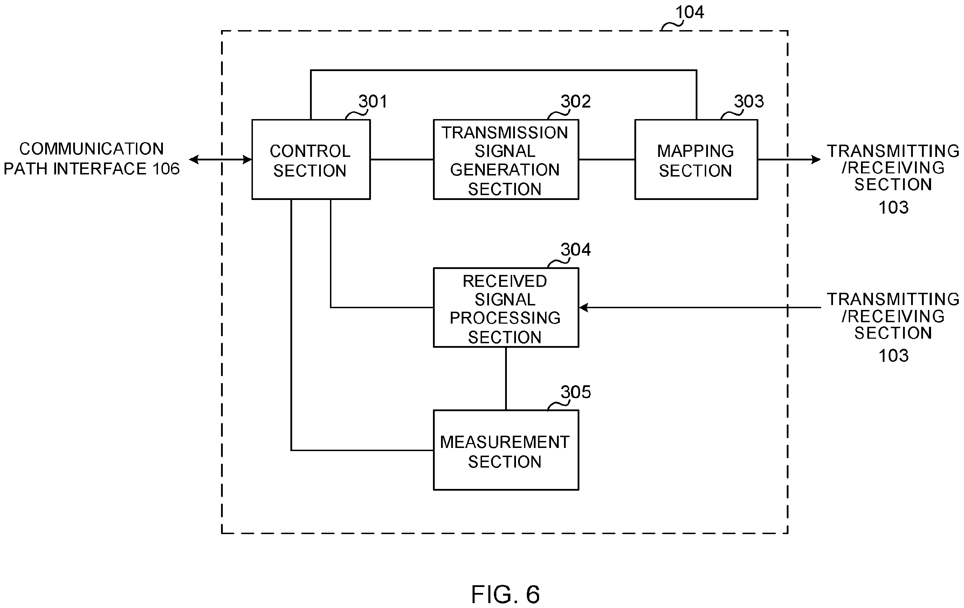

Fig. 6 is a diagram illustrating one example of a function configuration of the radio base station according to the one embodiment of the present invention. In addition, this example mainly illustrates function blocks of characteristic portions according to the present embodiment, and assumes that the radio base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present invention.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal. Furthermore, the control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

Furthermore, the control section 301 controls scheduling of an uplink data signal (e.g., a signal that is transmitted on the PUSCH), an uplink control signal (e.g., a signal that is transmitted on the PUCCH and/or the PUSCH and is, for example, transmission acknowledgement information), a random access preamble (e.g., a signal that is transmitted on the PRACH) and an uplink reference signal.

Furthermore, the control section 301 may determine configuration information for performing different control on transmission of at least one uplink shared channel of the first uplink shared channel, the second uplink shared channel and the third uplink shared channel from that of transmission of the other uplink shared channels.

The transmission signal generating section 302 generates a downlink signal (such as a downlink control signal, a downlink data signal or a downlink reference signal) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present invention.

The transmission signal generating section 302 generates, for example, a DL assignment for notifying downlink data allocation information, and/or a UL grant for notifying uplink data allocation information based on the instruction from the control section 301. The DL assignment and the UL grant are both DCI, and conform to a DCI format. Furthermore, the transmission signal generating section 302 performs encoding processing and modulation processing on a downlink data signal according to a code rate and a modulation scheme determined based on Channel State Information (CSI) from each user terminal 20.

The mapping section 303 maps the downlink signal generated by the transmission signal generating section 302, on given radio resources based on the instruction from the control section 301, and outputs the downlink signal to each transmission/reception section 103. The mapping section 303 can be composed of a mapper, a mapping circuit or a mapping apparatus described based on the common knowledge in the technical field according to the present invention.

The received signal processing section 304 performs reception processing (e.g., demapping, demodulation and decoding) on a received signal input from each transmission/reception section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present invention.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present invention.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ) or a Signal to Interference plus Noise Ratio (SINR)), a signal strength (e.g., a Received Signal Strength Indicator (RSSI)) or channel information (e.g., CSI). The measurement section 305 may output a measurement result to the control section 301.

### <User Terminal>

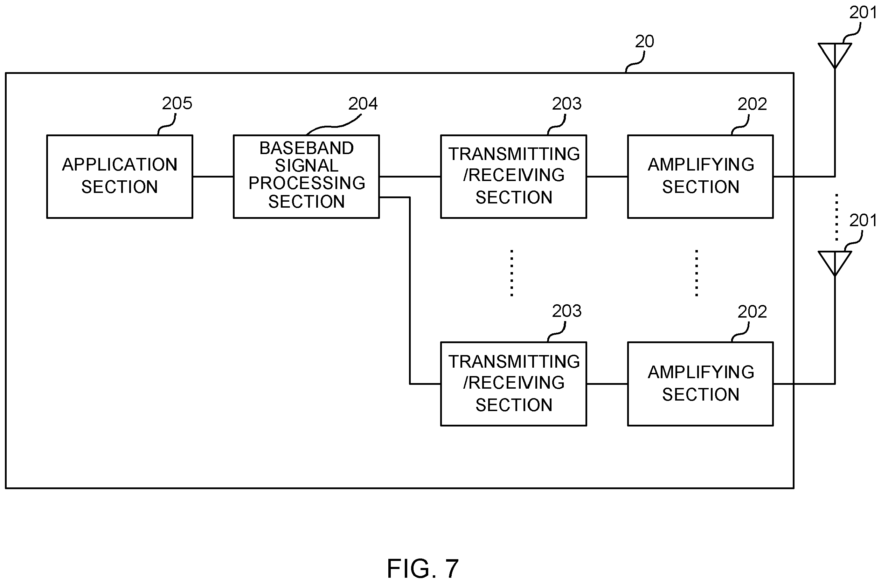

Fig. 7 is a diagram illustrating one example of an overall configuration of the user terminal according to the one embodiment of the present invention. The user terminal 20 includes pluralities of transmission/reception antennas 201, amplifying sections 202 and transmission/reception sections 203, a baseband signal processing section 204 and an application section 205. In this regard, the user terminal 20 only needs to be configured to include one or more of each of the transmission/reception antennas 201, the amplifying sections 202 and the transmission/reception sections 203.

Each amplifying section 202 amplifies a radio frequency signal received at each transmission/reception antenna 201. Each transmission/reception section 203 receives a downlink signal amplified by each amplifying section 202. Each transmission/reception section 203 performs frequency conversion on the received signal into a baseband signal, and outputs the baseband signal to the baseband signal processing section 204. The transmission/reception sections 203 can be composed of transmitters/receivers, transmission/reception circuits or transmission/reception apparatuses described based on the common knowledge in the technical field according to the present invention. In this regard, the transmission/reception sections 203 may be composed as an integrated transmission/reception section or may be composed of transmission sections and reception sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmission/reception section 203. Each transmission/reception section 203 converts the baseband signal output from the baseband signal processing section 204 into a radio frequency range, and transmits a radio frequency signal. The radio frequency signal subjected to the frequency conversion by each transmission/reception section 203 is amplified by each amplifying section 202, and is transmitted from each transmission/reception antenna 201.

Furthermore, each transmission/reception section 203 may receive the configuration information of the first uplink shared channel (CG type 1 transmission) that is scheduled by the higher layer signaling, the second uplink shared channel (CG type 2 transmission) that is scheduled by the higher layer signaling and triggered by the downlink control information, and the third uplink shared channel (DG transmission) that is scheduled by the downlink control information via the higher layer signaling.

Furthermore, each transmission/reception section 203 may transmit one of the first uplink shared channel, the second uplink shared channel and the third uplink shared channel.

Furthermore, each transmission/reception section 203 may receive the configuration information of the first uplink shared channel (CG type 1 transmission) that is scheduled by the higher layer signaling, the second uplink shared channel (CG type 2 transmission) that is scheduled by the higher layer signaling and triggered by the downlink control information, the third uplink shared channel (DG transmission) that is scheduled by the downlink control information, and a CSI reporting (SP-CSI reporting) that is scheduled by the higher layer signaling, triggered by the downlink control information and transmitted on an uplink shared channel via the higher layer signaling. Furthermore, each transmission/reception section 203 may transmit configuration information of at least two of the first uplink shared channel (CG type 1 transmission) that is scheduled by the higher layer signaling, the second uplink shared channel (CG type 2 transmission) that is scheduled by the higher layer signaling and triggered by the downlink control information, the third uplink shared channel (DG transmission) that is scheduled by the downlink control information, and the CSI reporting (SP-CSI reporting) that is scheduled by the higher layer signaling, triggered by the downlink control information and transmitted on the uplink shared channel via the higher layer signaling.

Furthermore, each transmission/reception section 203 may transmit the SP-CSI reporting on the uplink shared channel.

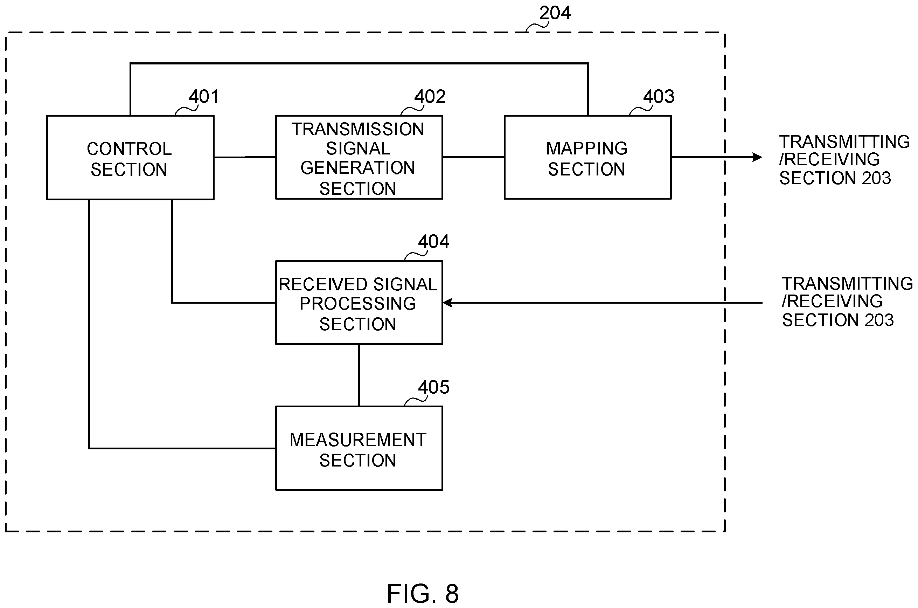

Fig. 8 is a diagram illustrating one example of a function configuration of the user terminal according to the one embodiment of the present invention. In addition, this example mainly illustrates function blocks of characteristic portions according to the present embodiment, and assumes that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present invention.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

Furthermore, the control section 401 may perform different control on transmission of at least one uplink shared channel of the first uplink shared channel, the second uplink shared channel and the third uplink shared channel from that of transmission of the other uplink shared channels based on the configuration information.

Furthermore, the configuration information may include independent parameters for at least two uplink shared channels of the first uplink shared channel, the second uplink shared channel and the third uplink shared channel.

Furthermore, the configuration information may include independent parameters for at least two uplink shared channels of the first uplink shared channel, the second uplink shared channel, the third uplink shared channel and the SP-CSI reporting on the uplink shared channel.

Furthermore, the configuration information may include parameters that are common between the second uplink shared channel and the third uplink common channel, and parameters of only the first uplink shared channel. Furthermore, the configuration information may include parameters that are common between the first uplink shared channel and the second uplink common channel, and parameters of only the third uplink shared channel.

Furthermore, the configuration information may include parameters that are common between the SP-CSI reporting on the uplink shared channel and the second uplink shared channel.

Furthermore, the configuration information may be parameters that are common between the first uplink shared channel, the second uplink shared channel and the third uplink shared channel.

Furthermore, the configuration information may be parameters that are common between the first uplink shared channel, the second uplink shared channel, the third uplink shared channel and the SP-CSI reporting on the uplink shared channel.

Furthermore, the configuration information may include at least one specific parameter of a type of resource allocation to the uplink shared channel, whether or not an accumulation process of a transmission power control value is enabled, and information for determining a resource amount for the uplink control information to be transmitted on the uplink shared channel. Furthermore, the control section 401 may perform different control on transmission of at least one uplink shared channel of the first uplink shared channel, the second uplink shared channel and the third uplink shared channel from that of transmission of the other uplink shared channels by using the specific parameter.

Furthermore, the configuration information may include at least one specific parameter of the type of resource allocation to the uplink shared channel, whether or not an accumulation process of a transmission power control value is enabled, and the information for determining the resource amount for the uplink control information to be transmitted on the uplink shared channel. Furthermore, the control section 401 may perform different control on transmission of at least one uplink shared channel of the first uplink shared channel, the second uplink shared channel, the third uplink shared channel and the SP-CSI reporting on the uplink shared channel from that of transmission of the other uplink shared channels by using the specific parameter.

The transmission signal generating section 402 generates an uplink signal (such as an uplink control signal, an uplink data signal or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present invention.

The transmission signal generating section 402 generates, for example, an uplink control signal related to transmission acknowledgement information and Channel State Information (CSI) based on the instruction from the control section 401. Furthermore, the transmission signal generating section 402 generates an uplink data signal based on the instruction from the control section 401. When, for example, the downlink control signal notified from the radio base station 10 includes a UL grant, the transmission signal generating section 402 is instructed by the control section 401 to generate an uplink data signal.

The mapping section 403 maps the uplink signal generated by the transmission signal generating section 402, on radio resources based on the instruction from the control section 401, and outputs the uplink signal to each transmission/reception section 203. The mapping section 403 can be composed of a mapper, a mapping circuit or a mapping apparatus described based on the common knowledge in the technical field according to the present invention.

The received signal processing section 404 performs reception processing (e.g., demapping, demodulation and decoding) on the received signal input from each transmission/reception section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present invention. Furthermore, the received signal processing section 404 can compose the reception section according to the present invention.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present invention.

For example, the measurement section 405 may perform RRM measurement or CSI measurement based on the received signal. The measurement section 405 may measure received power (e.g., RSRP), received quality (e.g., RSRQ or an SINR), a signal strength (e.g., RSSI) or channel information (e.g., CSI). The measurement section 405 may output a measurement result to the control section 401.

### <Hardware Configuration>

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

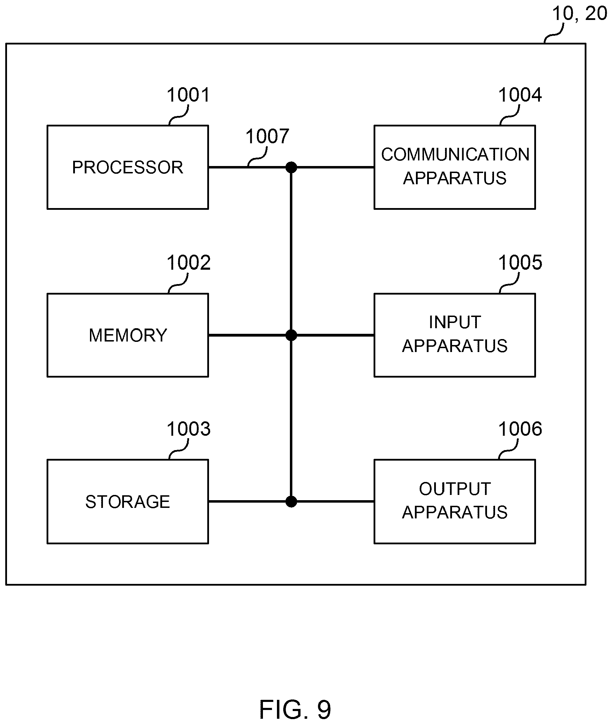

For example, the radio base station and the user terminal according to the one embodiment of the present invention may function as computers that perform processing of the radio communication method according to the present invention. Fig. 9 is a diagram illustrating one example of the hardware configurations of the radio base station and the user terminal according to the one embodiment of the present invention. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 9 or may be configured without including part of the apparatuses.

For example, Fig. 9 illustrates the only one processor 1001. However, there may be a plurality of processors. Furthermore, processing may be executed by 1 processor or processing may be executed by 1 or more processors concurrently or successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and control reading and/or control writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present invention.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain. Furthermore, the mini slot may be referred to as a sub slot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

Notification of information is not limited to the aspects/embodiment described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be performed implicitly (by, for example, not notifying the given information or by notifying another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description are interchangeably used.

In this description, the terms "Base Station (BS)", "radio base station", "eNB", "gNB", "cell", "sector", "cell group", "carrier" and "component carrier" can be interchangeably used. The base station will be also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be interchangeably used. The base station will be also referred to as a term such as a fixed station, a NodeB, an eNodeB (eNB), an access point, a transmission point, a reception point, a femtocell or a small cell in some cases.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of the physical and logical connections. For example, "connection" may be read as "access"

It can be understood in this description that, when connected, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an exclusive OR.

## Claims

1. A terminal (20) comprising:
a receiving section (203) that receives a first configuration which includes parameters common to a first physical uplink shared channel, PUSCH, transmission corresponding to configured grant type 1 and a second PUSCH transmission corresponding to configured grant type 2, and receives a second configuration for a third PUSCH transmission scheduled by a dynamic grant; and
a control section (401) that performs one of the first PUSCH transmission and the second PUSCH transmission, based on the first configuration, and performs the third PUSCH transmission based on the second configuration.

2. The terminal (20) according to claim 1, wherein the parameters include specific parameters for an uplink control information on PUSCH,
when the specific parameters are used for the configured grant type 1, the specific parameters indicate a configuration of semi-static beta-offset, and
when the specific parameters are used for the configured grant type 2, the specific parameters indicate a configuration of one of dynamic beta-offset and semi-static beta-offset.

3. The terminal (20) according to claim 1 or 2, wherein the receiving section (203) receives a downlink control information indicating activation or release of the configured grant type 2, and
a special field in the downlink control information is set to a value for the configured grant type 2.

4. A radio communication method for a terminal (20) comprising:
a receiving a first configuration which includes parameters common to a first physical uplink shared channel, PUSCH, transmission corresponding to configured grant type 1 and a second PUSCH transmission corresponding to configured grant type 2;
receiving a second configuration for a third PUSCH transmission scheduled by a dynamic grant;
performing one of the first PUSCH transmission and the second PUSCH transmission, based on the first configuration; and
performing the third PUSCH transmission based on the second configuration.

5. A base station (10) comprising:
a transmitting section (103) that transmits a first configuration which includes parameters common to a first physical uplink shared channel, PUSCH, reception corresponding to configured grant type 1 and a second PUSCH reception corresponding to configured grant type 2, and transmits a second configuration for a third PUSCH reception scheduled by a dynamic grant; and
a control section (301) that performs one of the first PUSCH reception and the second PUSCH reception, based on the first configuration, and performs the third PUSCH reception based on the second configuration.

6. A system comprising:
a terminal (20) that comprises:
a receiving section (203) that receives a first configuration which includes parameters common to a first physical uplink shared channel, PUSCH, transmission corresponding to configured grant type 1 and a second PUSCH transmission corresponding to configured grant type 2, and receives a second configuration for a third PUSCH transmission scheduled by a dynamic grant; and
a control section (401) that performs one of the first PUSCH transmission and the second PUSCH transmission, based on the first configuration, and performs the third PUSCH transmission based on the second configuration; and
a base station (10) that comprises:
a transmitting section (103) that transmits the first configuration and transmits the second configuration; and
a control section (301) that performs reception of one of the first PUSCH transmission and the second PUSCH transmission, based on the first configuration, and performs reception of the third PUSCH transmission based on the second configuration.

## Patentansprüche

1. Endgerät (20), umfassend:
einen Empfangsabschnitt (203), der eine erste Konfiguration empfängt, die Parameter einschließt, die einer ersten gemeinsam genutzter physikalischer Aufwärtsverbindungskanal-, PUSCH-, Übertragung entsprechend einem konfigurierten Gewährungstyp 1 und einer zweiten PUSCH-Übertragung entsprechend einem konfigurierten Gewährungstyp 2 gemeinsam sind, und der eine zweite Konfiguration für eine dritte PUSCH-Übertragung empfängt, die durch eine dynamische Gewährung geplant ist; und
einen Steuerabschnitt (401), der entweder die erste PUSCH-Übertragung oder die zweite PUSCH-Übertragung basierend auf der ersten Konfiguration durchführt und die dritte PUSCH-Übertragung basierend auf der zweiten Konfiguration durchführt.

2. Endgerät (20) nach Anspruch 1, wobei die Parameter spezifische Parameter für eine Aufwärtsverbindungssteuerinformation auf PUSCH einschließen,
wenn die spezifischen Parameter für den konfigurierten Gewährungstyp 1 verwendet werden, die spezifischen Parameter eine Konfiguration von semistatischem Beta-Offset anzeigen, und
wenn die spezifischen Parameter für den konfigurierten Gewährungstyp 2 verwendet werden, die spezifischen Parameter eine Konfiguration von entweder dynamischem Beta-Offset oder semistatischem Beta-Offset anzeigen.

3. Endgerät (20) nach Anspruch 1 oder 2, wobei der Empfangsabschnitt (203) eine Abwärtsverbindungssteuerinformation empfängt, die die Aktivierung oder Freigabe des konfigurierten Gewährungstyps 2 anzeigt, und
ein spezielles Feld in der Abwärtsverbindungssteuerinformation auf einen Wert für den konfigurierten Gewährungstyp 2 gesetzt wird.

4. Funkkommunikationsverfahren für ein Endgerät (20), umfassend:
ein Empfangen einer ersten Konfiguration, die Parameter einschließt, die einer ersten gemeinsam genutzter physikalischer Aufwärtsverbindungskanal-, PUSCH-, Übertragung entsprechend einem konfigurierten Gewährungstyp 1 und einer zweiten PUSCH-Übertragung entsprechend einem konfigurierten Gewährungstyp 2 gemeinsam sind;
Empfangen einer zweiten Konfiguration für eine dritte PUSCH-Übertragung, die durch eine dynamische Gewährung geplant ist;
Durchführen entweder der ersten PUSCH-Übertragung oder der zweiten PUSCH-Übertragung basierend auf der ersten Konfiguration; und
Durchführen der dritten PUSCH-Übertragung basierend auf der zweiten Konfiguration.

5. Basisstation (10), umfassend:
einen Übertragungsabschnitt (103), der eine erste Konfiguration überträgt, die Parameter einschließt, die einem ersten gemeinsam genutzter physikalischer Aufwärtsverbindungskanal-, PUSCH-, Empfang entsprechend einem konfigurierten Gewährungstyp 1 und einem zweiten PUSCH-Empfang entsprechend einem konfigurierten Gewährungstyp 2 gemeinsam sind, und der eine zweite Konfiguration für einen dritten PUSCH-Empfang überträgt, der durch eine dynamische Gewährung geplant ist; und
einen Steuerabschnitt (301), der entweder den ersten PUSCH-Empfang oder den zweiten PUSCH-Empfang basierend auf der ersten Konfiguration durchführt und der den dritten PUSCH-Empfang basierend auf der zweiten Konfiguration durchführt.

6. System, umfassend:
ein Endgerät (20), das umfasst:
einen Empfangsabschnitt (203), der eine erste Konfiguration empfängt, die Parameter einschließt, die einer ersten gemeinsam genutzter physikalischer Aufwärtsverbindungskanal-, PUSCH-, Übertragung entsprechend einem konfigurierten Gewährungstyp 1 und einer zweiten PUSCH-Übertragung entsprechend einem konfigurierten Gewährungstyp 2 gemeinsam sind, und der eine zweite Konfiguration für eine dritte PUSCH-Übertragung empfängt, die durch eine dynamische Gewährung geplant ist; und
einen Steuerabschnitt (401), der entweder die erste PUSCH-Übertragung oder die zweite PUSCH-Übertragung basierend auf der ersten Konfiguration durchführt und der die dritte PUSCH-Übertragung basierend auf der zweiten Konfiguration durchführt; und
eine Basisstation (10), die umfasst:
einen Übertragungsabschnitt (103), der die erste Konfiguration überträgt und die zweite Konfiguration überträgt; und
einen Steuerabschnitt (301), der einen Empfang entweder der ersten PUSCH-Übertragung oder der zweiten PUSCH-Übertragung basierend auf der ersten Konfiguration durchführt und der einen Empfang der dritten PUSCH-Übertragung basierend auf der zweiten Konfiguration durchführt.

## Revendications

1. Terminal (20) comprenant :
une section (203) de réception qui reçoit une première configuration qui inclut des paramètres communs à une première transmission de canal partagé de liaison montante physique, PUSCH, correspondant à un type d'autorisation configuré 1 et une deuxième transmission de PUSCH correspondant à un type d'autorisation configurée 2 et reçoit une seconde configuration pour une troisième transmission de PUSCH planifiée par une autorisation dynamique ; et
une section (401) de commande qui met en oeuvre une de la première transmission de PUSCH et de la deuxième transmission de PUSCH, sur la base de la première configuration et met en oeuvre la troisième transmission de PUSCH sur la base de la seconde configuration.

2. Terminal (20) selon la revendication 1, dans lequel les paramètres incluent des paramètres spécifiques pour une information de commande de liaison montante sur le PUSCH,
lorsque les paramètres spécifiques sont utilisés pour le type d'autorisation configurée 1, les paramètres spécifiques indiquent une configuration de décalage bêta semi-statique et
lorsque les paramètres spécifiques sont utilisés pour le type d'autorisation configurée 2, les paramètres spécifiques indiquent une configuration d'un parmi un décalage bêta dynamique et un décalage bêta semi-statique.

3. Terminal (20) selon la revendication 1 ou la revendication 2, dans lequel la section (203) de réception reçoit une information de commande de liaison descendante indiquant l'activation ou la libération du type d'autorisation configurée 2 et
un champ spécial dans l'information de commande de liaison descendante est défini sur une valeur pour le type d'autorisation configurée 2.

4. Procédé de radiocommunication pour un terminal (20) comprenant :
une réception d'une première configuration qui inclut des paramètres communs à une première transmission de canal partagé de liaison montante physique, PUSCH, correspondant à un type d'autorisation configurée 1 et une deuxième transmission de PUSCH correspondant à un type d'autorisation configurée 2 ;
une réception d'une seconde configuration pour une troisième transmission de PUSCH planifiée par une autorisation dynamique ;
une mise en oeuvre d'une de la première transmission de PUSCH et de la deuxième transmission de PUSCH, sur la base de la première configuration ; et
une mise en oeuvre de la troisième transmission de PUSCH sur la base de la seconde configuration.

5. Station de base (10) comprenant :
une section (103) de transmission qui transmet une première configuration qui inclut des paramètres communs à une première réception de canal partagé de liaison montante physique, PUSCH, correspondant au type d'autorisation configurée 1 et une deuxième réception de PUSCH correspondant au type d'autorisation configurée 2, et transmet une seconde configuration pour une troisième réception de PUSCH planifiée par une autorisation dynamique ; et
une section (301) de commande qui met en oeuvre l'une de la première réception de PUSCH et de la deuxième réception de PUSCH, sur la base de la première configuration et met en oeuvre la troisième réception de PUSCH sur la base de la seconde configuration.

6. Système comprenant :
un terminal (20) qui comprend :
une section (203) de réception qui reçoit une première configuration qui inclut des paramètres communs à une première transmission de canal partagé de liaison montante physique, PUSCH, correspondant à un type d'autorisation configuré 1 et une deuxième transmission de PUSCH correspondant à un type d'autorisation configurée 2, et reçoit une seconde configuration pour une troisième transmission de PUSCH planifiée par une autorisation dynamique ; et
une section (401) de commande qui met en oeuvre l'une de la première transmission de PUSCH et de la deuxième transmission de PUSCH, sur la base de la première configuration et met en oeuvre la troisième transmission de PUSCH sur la base de la seconde configuration ; et
une station de base (10) qui comprend :
une section (103) de transmission qui transmet la première configuration et transmet la seconde configuration ; et
une section (301) de commande qui met en oeuvre la réception de l'une de la première transmission de PUSCH et de la deuxième transmission de PUSCH, sur la base de la première configuration, et met en oeuvre la réception de la troisième transmission de PUSCH sur la base de la seconde configuration.
